# EUROPÄISCHE PATENTSCHRIFT

(11) **EP 2 659 582 B1**
(45) Veröffentlichungstag und Bekanntmachung des Hinweises auf die Patenterteilung: **15.04.2015**
(21) Anmeldenummer: 11791501.7
(22) Anmeldetag: 22.11.2011
(51) Int. Cl.: H02P 9/30

(54) **VERFAHREN UND VORRICHTUNG ZUM BETREIBEN EINER FREMD- ODER HYBRIDERREGTEN ELEKTRISCHEN MASCHINE**
METHOD AND DEVICE FOR OPERATING AN ELECTRIC MACHINE HAVING EXTERNAL OR HYBRID EXCITATION
PROCÉDÉ ET DISPOSITIF POUR FAIRE FONCTIONNER UN MOTEUR ÉLECTRIQUE À EXCITATION SÉPARÉE OU HYBRIDE

(30) Priorität: 27.12.2010 DE 102010064177
(43) Veröffentlichungstag der Anmeldung: 06.11.2013
(73) Patentinhaber: Robert Bosch GmbH, 70442 Stuttgart (DE)
(72) Erfinder: NEUBURGER, Martin, 73312 Geislingen (DE); REUTLINGER, Kurt, 70174Stuttgart (DE)
(86) Internationale Anmeldenummer: PCT/EP2011/070650
(87) Internationale Veröffentlichungsnummer: WO 2012/089412

(56) Entgegenhaltungen:
- DE-A1-102008 036 831
- DE-B- 1 110 031
- JP-A- 8 256 497
- US-A1- 2008 309 271

## Beschreibung

### Technisches Gebiet

Die Erfindung betrifft fremd- oder hybriderregte elektrische Maschinen, insbesondere Verfahren zum Betreiben derartiger elektrischer Maschinen.

### Stand der Technik

Als elektronisch kommutierte elektrische Maschinen sind Synchronmotoren weit verbreitet. Diese sind für viele Anwendungen sehr geeignet, weisen jedoch insbesondere im Teillastbereich den Nachteil auf, dass die dort notwendige Feldschwächung sehr aufwändig zu realisieren ist. Im Gegensatz dazu wird bei fremd- oder hybriderregten elektrischen Maschinen die Feldschwächung sehr einfach durch eine Reduzierung des Erregermagnetfelds erreicht. Bei fremderregten elektrischen Maschinen wird das Erregermagnetfeld mithilfe einer separaten Erregerwicklung erzeugt, während bei hybriderregten elektrischen Maschinen das Erregermagnetfeld sowohl von Permanentmagneten als auch mithilfe einer separaten Erregerwicklung erzeugt wird.

Die Erregerwicklung dient dazu, ein statisches Magnetfeld auf einen Läuferkörper zu richten, der den magnetischen Fluss sammelt und über die Läuferpole 24 in Richtung des Stators lenkt. Bei bisherigen fremd- oder hybriderregten Motoren ist der Schaltungsaufwand aufgrund der zusätzlichen Erregerwicklung erhöht und es ist sowohl außerhalb als auch innerhalb der elektrischen Maschine eine entsprechende Verdrahtung notwendig, um einen Gleichstrom durch die Erregerwicklung bereitzustellen. Dadurch ist der Aufwand bei der Herstellung und einem Einsatz solcher fremd- oder hybriderregten elektrischen Maschinen deutlich erhöht.

Die Druckschrift DE 10 2008 036 831 A1 offenbart eine elektrische Maschine mit einem Läufer, einem Stator und einer Erregerwicklung, wobei die Erregerwicklung mit einer der Phasenleitungen und einer separaten Erregerschaltung verbunden ist.

Aus der Druckschrift DE 1110031 ist eine elektrische Maschine mit einem Läufer, einem Stator und einer Erregerwicklung bekannt, wobei die Erregerwicklung mit einem Sternpunkt einer Sternschaltung verbunden ist und durch eine separate Erregerschaltung angesteuert wird.

Die Druckschrift US2008/8309271 zeigt eine elektrische Maschine mit einem Läufer, einem Stator und einer Erregerwicklung, wobei der Stator in Dreieckschaltung verschaltete Statorspulen aufweist.

Die Druckschrift JP 8256497 beschreibt eine elektrische Maschine mit einem Läufer, einem Stator und einer Erregerwicklung, wobei die Erregerwicklung durch eine separate Erregerschaltung angesteuert wird.

Es ist daher Aufgabe der vorliegenden Erfindung, den Aufwand zum Verschalten der Erregerwicklung in fremd- oder hybriderregten elektrischen Maschinen zu reduzieren. Es ist weiterhin eine Aufgabe der Erfindung, ein Verfahren zum Betreiben von fremd- oder hybriderregten elektrischen Maschinen zur Verfügung zu stellen.

### Offenbarung der Erfindung

Diese Aufgabe wird durch die elektrische Maschine gemäß Anspruch 1 sowie durch die Motorsysteme und die Verfahren zum Betreiben einer elektrischen Maschine gemäß den nebengeordneten Ansprüchen gelöst.

Weitere vorteilhafte Ausgestaltungen der vorliegenden Erfindung sind in den abhängigen Ansprüchen angegeben.

Gemäß einem ersten Aspekt ist eine elektronisch kommutierte elektrische Maschine vorgesehen. Die elektrische Maschine umfasst:
- einen Läufer;
- eine Erregerwicklung, die an dem Läufer angeordnet ist, um ein Gleichmagnetfeld in dem Läufer zu generieren oder zu verändern;
- eine drei- oder mehrphasige Statorwicklung mit Phasen, die über Phasenlei-tungen ansteuerbar sind;
- wobei die Erregerwicklung an der Statorwicklung angeschlossen ist.

Eine Idee der obigen elektrischen Maschine besteht darin, die Ansteuerung der Erregerwicklung direkt über einen oder mehrere der Phasenstränge zu realisieren. Dadurch ist es möglich, bestehende elektrische Verbindungen für die Phasenspannungen zusätzlich auch zum Ansteuern der Erregerwicklung zu nutzen. Der bislang benötigte zusätzliche Aufwand zum Anschließen der Erregerwicklung sowohl außerhalb als auch innerhalb der elektrischen Maschine kann deutlich reduziert werden.

Die Effizienz der obigen elektrischen Maschine kann erhöht werden, da eine geringere Erregung aufgebracht wird.

Darüber hinaus ist die obige elektrische Maschine eigensicher, da auf ein Anordnen eines Phasentrennrelais im Inneren der elektrischen Maschine verzichtet werden kann. Im Fehlerfall wird aufgrund des gleichzeitigen Ausfalls der Bestromung der Erregerwicklung das Erregermagnetfeld sofort abgeschaltet bzw. - bei hybriderregten Maschinen - deutlich reduziert, so dass bei diversen Fehlerfällen, wie beispielsweise Kabelbruch, Kurzschluss der Leistungsschalter oder dergleichen, die elektrische Maschine automatisch drehmomentfrei wird und dadurch deren eigensicherer Zustand ohne gezielte Ansteuerung eines Schalters oder dergleichen sowie ohne kostenintensiven Hardwareaufwand realisiert werden kann.

Weiterhin kann die Erregerwicklung mit einem Versorgungspotential über eine Erregerwicklungsleitung verbindbar sein, wobei die Erregerwicklungsleitung insbesondere mit einem elektrisch leitenden Gehäuse der elektrischen Maschine verbunden ist.

Gemäß einer Ausführungsform kann die Erregerwicklung mit einer der Phasenleitungen verbunden sein.

Gemäß einer weiteren Ausführungsform kann die Statorwicklung in Sternschaltung verschaltete Statorspulen aufweisen, wobei die Erregerwicklung mit einem Sternpunkt der Sternschaltung verbunden ist.

Gemäß einem weiteren Aspekt ist ein Motorsystem vorgesehen. Das Motorsystem umfasst:
- die obige elektrische Maschine, bei der die Erregerwicklung mit einer der Phasenleitungen verbunden ist;
- eine Leistungsstufe zum Bereitstellen von Phasenspannungen bzw. Phasenströmen auf den Phasenleitungen;
- eine Steuereinheit zum Ansteuern der Leistungsstufe, so dass die mit der Erregerwicklung verbundene Phasenleitung ein konstantes Phasenpotential aufweist und so dass die übrigen Phasenspannungen so bereitgestellt werden, dass sich als Differenzspannungen zwischen den Phasenleitungen jeweils sinusförmige Spannungsverläufe ergeben.

Gemäß einem weiteren Aspekt ist ein Motorsystem vorgesehen. Das Motorsystem umfasst:
- die obige elektrische Maschine, bei der die Statorwicklung in Sternschaltung verschaltete Statorspulen aufweist und bei der die Erregerwicklung mit einem Sternpunkt der Sternschaltung verbunden ist;
- eine Leistungsstufe zum Bereitstellen von Phasenspannungen bzw. Phasenströmen auf den Phasenleitungen;
- eine Steuereinheit zum Ansteuern der Leistungsstufe, so dass Phasenspannungen jeweils sinusförmige, zueinander phasenversetzte Spannungsverläufe aufweisen.

Weiterhin kann die Steuereinheit ausgebildet sein, um die Phasenspannungen mithilfe einer Pulsweitenmodulation zu generieren, indem Tastverhältnisse der Pulsweitenmodulation zum Generieren der Phasenspannungen variiert werden, und um einen Strom durch die Erregerwicklung einzustellen, indem die Tastverhältnisse für alle Phasenspannungen mit einem Tastverhältnisoffset beaufschlagt werden.

Gemäß einem weiteren Aspekt ist ein Verfahren zum Betreiben der obigen elektrischen Maschine vorgesehen, bei der die Erregerwicklung mit einer der Phasenleitungen verbunden ist, wobei an die mit der Erregerwicklung verbundene Phasenleitung ein konstantes Phasenpotential angelegt wird und wobei die übrigen Phasenspannungen so bereitgestellt werden, dass sich als Differenzspannungen zwischen den Phasenleitungen jeweils sinusförmige Spannungsverläufe ergeben.

Gemäß einem weiteren Aspekt ist ein Verfahren zum Betreiben der obigen elektrischen Maschine vorgesehen, bei der die Statorwicklung in Sternschaltung verschaltete Statorspulen aufweist und bei der die Erregerwicklung mit einem Stempunkt der Sternschaltung verbunden ist, wobei die Leistungsstufe so angesteuert wird, dass die Phasenspannungen jeweils sinusförmige, zueinander phasenversetzte Spannungsverläufe aufweisen.

Gemäß einer Ausführungsform können die Phasenspannungen mithilfe einer Pulsweitenmodulation generiert werden, indem Tastverhältnisse der Pulsweitenmodulation zum Generieren der Phasenspannungen variiert werden, und wobei ein Strom durch die Erregerwicklung eingestellt wird, indem die Tastverhältnisse für alle Phasenspannungen mit einem Tastverhältnisoffset beaufschlagt werden.

### Kurzbeschreibung der Zeichnungen

Bevorzugte Ausführungsformen der vorliegenden Erfindung werden nachfolgend anhand der beigefügten Zeichnungen näher erläutert. Es zeigen:
- Figur 1: eine schematische Darstellung einer herkömmlichen fremderregten elektrischen Maschine;
- Figur 2: ein Diagramm des Verlaufs der Phasenströme beim Betrieb der elektrischen Maschine der Figur 1;
- Figur 3: eine schematische Darstellung einer fremderregten elektrischen Maschine; und
- Figur 4: eine schematische Darstellung einer Ausführungsform einer fremderregten elektrischen Maschine.

### Beschreibung von Ausführungsformen

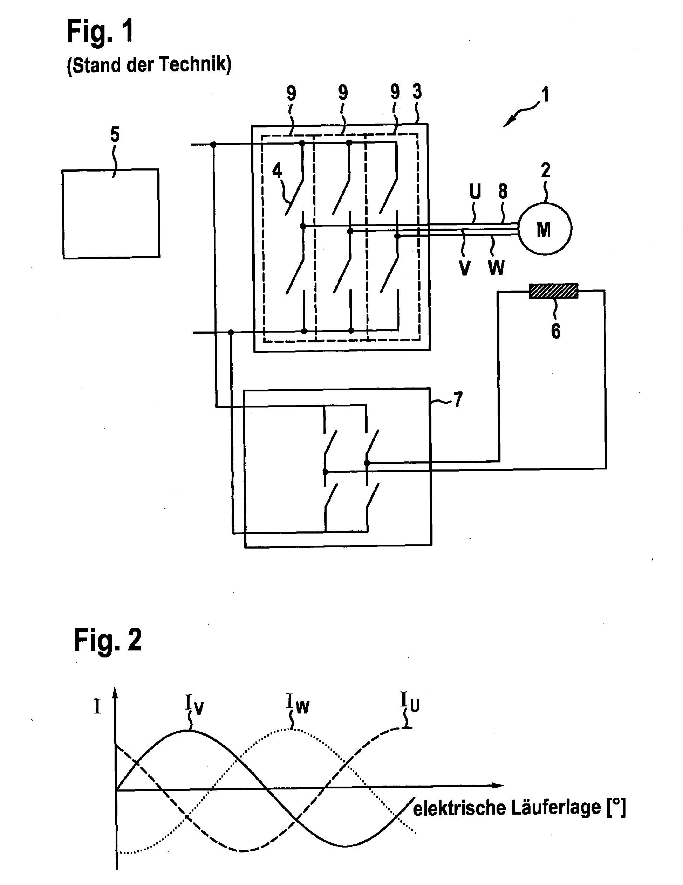

Figur 1 zeigt eine schematische Darstellung eines Motorsystems 1 zum Betreiben einer fremderregten elektrischen Maschine 2. Die elektrische Maschine 2 ist elektronisch kommutiert und weist einen Läufer 21, z. B. in Form eines Rotors, mit Läuferpolen 24 und einen Stator 22 mit zu dem Läufer gerichteten Statorzähnen auf. Das Motorsystem weist eine Leistungsstufe 3 auf, die über Phasenleitungen 8 mit der elektrischen Maschine 2 verbunden ist. Die Leistungsstufe 3 stellt die Phasenspannungen bzw. Phasenströme zum Betreiben der elektrischen Maschine 2 bereit

Im vorliegenden Ausführungsbeispiel ist die elektrische Maschine 2 dreiphasig ausgebildet, so dass die Leistungsstufe 3 drei Inverterschaltungen 9 in einer so genannten B6-Anordnung aufweist. Die Inverterschaltungen 9 weisen jeweils zwei seriell zwischen einem hohen Versorgungspotential V_{H} und einem niedrigen Versorgungspotential V_{L} geschaltete Leistungshalbleiterschalter 4 auf, die von einer Steuereinheit 5 zum Öffnen oder Schließen, d. h. zum Schalten in einen nichtleitenden Zustand oder in einen leitenden Zustand, ansteuerbar sind. Die Leistungshalbleiterschalter 4 können beispielsweise als Thyristoren, IGBTs, IGCTs, Leistungs-CMOS-Transistoren oder dergleichen ausgebildet sein. Zwischen den Leistungshalbleiterschaltern 4 der Inverterschaltungen 9 sind die Phasenleitungen 8 angeschlossen.

Die elektrische Maschine 2 ist fremd- oder hybriderregt, d. h. das Erregermagnetfeld wird ganz oder teilweise mithilfe einer Erregerwicklung 6 bereitgestellt. Die Erregerwicklung 6 ist in der Regel quer zu einer axialen Richtung der elektrischen Maschine 2 angeordnet und erzeugt ein Magnetfeld in axialer Richtung, das von dem Läufer 21 aufgenommen wird. Der Läufer 21 lenkt die Richtung des aufgenommenem Magnetfeld so um, dass es durch die Läuferpole 24 verläuft und in Richtung der Statorzähne aus den Läuferpolen 24 austritt.

Die Erregerwicklung 6 ist über eine Erregerschaltung 7 mit elektrischer Energie versorgt. Die Erregerschaltung 7 ist in der Lage, einen einstellbaren Erregerstrom bzw. eine einstellbare Erregerspannung an die Erregerwicklung 6 anzulegen, wobei die Erregerspannung bzw. der Erregerstrom durch eine pulsweitenmodulierte Ansteuerung von Inverterschaltungen 9 der Erregerschaltung 7 erzeugt werden kann.

Zum Ansteuern der elektrischen Maschine 2 legt die Steuereinheit 5 Phasenspannungen an die Phasenleitungen 8 an. Die Phasenspannungen werden zum Realisieren einer Sinuskommutierung als drei phasenversetzte sinusförmige Spannungsverläufe generiert, die Verläufe von Phasenströmen I_{U}, I_{V}, I_{W} bewirken, die beispielhaft in Figur 2 dargestellt sind.

Figur 2 zeigt den typischen Stromverlauf der Phasenströme I_{U}, I_{V}, I_{W} für eine konstante Rotation der elektrischen Maschine 2 bei konstantem Drehmoment. Die sinusförmigen Phasenströme sind um 120° (elektrischer Läuferlage) zueinander phasenverschoben. Zum Generieren der Phasenströme I_{U}, I_{V}, I_{W}, deren Verläufe beispielsweise in Figur 2 dargestellt sind, können entsprechende Phasenspannungen U_{U}, U_{V}, U_{W} bzw. Phasenpotentiale angelegt werden. Dabei ist die absolute Höhe der Phasenpotentiale jedoch unerheblich, da die Phasenströme I_{U}, I_{V}, I_{W} lediglich durch die Differenzspannungen zwischen den Phasen bestimmt werden.

Bisherige fremderregte elektrische Maschinen weisen die Erregerschaltung 7 sowie die elektrische Verbindung zwischen der Erregerschaltung 7 und der Erregerwicklung 6 auf, was insbesondere gegenüber herkömmlichen Synchronmaschinen einen zusätzlichen Aufwand beim Aufbau von fremderregten bzw. hybriderregten elektrischen Maschinen mit sich bringt.

Zum Erzeugen der Phasenspannungen U_{U}, U_{V}, U_{W} werden die Leistungshalbleiterschalter 4 durch die Steuereinheit 5 gemäß einer Pulsweitenmodulation angesteuert. Die Pulsweitenmodulation ermöglicht es, zu jedem Zeitpunkt durch schnelles wechselweises Anlegen des hohen Versorgungspotentials V_{H} und des niedrigen Versorgungspotentials V_{L} der Phasenleitung ein Tastverhältnis vorzugeben, das im Prinzip die einzustellende Spannung als einen Anteil einer Versorgungsspannung U_{Vers} =V_{H} - V_{L} darstellt, die an der Leistungsstufe 3 angelegt ist. Zum Einstellen einer bestimmten Phasenspannung wird in der Steuereinheit 5 das Tastverhältnis als Verhältnis der Einschaltzeitdauer des mit dem hohen Versorgungspotential V_{H} verbundenen Leistungshalbleiterschalters 4 (Pull-High-Schalter) zu einer festgelegten Zykluszeitdauer der Pulsweitenmodulation vorgegeben. Während der Einschaltzeitdauer wird der Pull-High-Schalter der beiden Leistungshalbleiterschalter 4 der betreffenden Inverterschaltung 9 geschlossen, um die Versorgungsspannung U_{Vers} an den Phasenanschluss auszugeben. Nach Verstreichen der Einschaltzeitdauer bis zum Ende des entsprechenden Zyklus wird der Pull-High-Schalter geöffnet und stattdessen der Pull-Low-Schalter geschlossen, um so ein Massepotential bzw. das niedrige Versorgungspotential V_{L} an den betreffenden Phasenanschluss anzulegen.

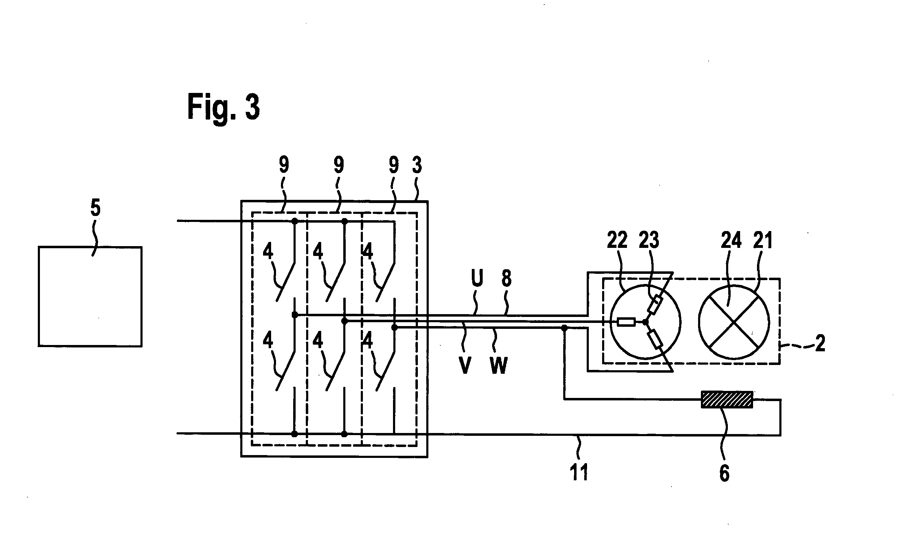

In Figur 3 ist eine schematische Darstellung eines Motorsystems 10 dargestellt, bei dem auf die Erregerschaltung 7 verzichtet werden kann und lediglich eine Erregerwicklungsleitung 11 zum elektrischen Verbinden eines der Versorgungspotentiale, z. B. dem niedrigen Versorgungspotential V_{L}, mit der Erregerwicklung 6 vorgesehen ist. In dem Motorsystem der Figur 3, das sonsten im Wesentlichen dem Motorsystem 1 der Figur 1 entspricht, ist die Erregerwicklung 6 zwischen dem niedrigen Versorgungspotential V_{L} und einer der Phasenleitungen 8, in diesem Fall der Phasenleitung 8 der Phase W, angeschlossen.

Zur Ansteuerung der Erregerwicklung 6 wird in der Regel ein Gleichstrom benötigt, der lediglich betriebspunktabhängig, d. h. deutlich langsamer, variiert werden kann als dies für die Phasenspannungen U_{U}, Uv, Uw bzw. Phasenströme I_{U}, I_{V}, I_{W} der Fall ist. Zum Bereitstellen des Erregergleichstroms durch die Erregerwicklung wird nun die Ansteuerung der Leistungshalbleiterschalter 4 der Leistungsstufe 3 so variiert, dass die der Phase W zugeordnete Inverterschaltung 9 im Wesentlichen eine konstante Spannung bereitstellt. Diese Spannung kann durch Pulsweitenmodulation mit einem vorgegebenen Tastverhältnis generiert werden. Das Tastverhältnis kann betriebspunktabhängig durch die Steuereinheit 5 festgelegt werden und bestimmt die Stärke des durch die Erregerwicklung 6 erzeugten Erregermagnetfelds.

Die Inverterschaltungen 9 der übrigen Phasen U, V werden nun so angesteuert, dass im Vergleich zu der Ansteuerung, die der in Figur 2 schematisch dargestellten dreiphasigen Ansteuerung entspricht, die gleichen Phasenströme I_{U}, I_{V}, I_{W} fließen. Dies wird erreicht, indem, obwohl die Phasenspannung U_{W} der Phase W etwa konstant gehalten wird, die Phasenspannungen U_{U}, U_{V} so variiert werden, dass die Differenzspannungen zwischen den Phasen U, V, W denen entsprechen, die im herkömmlichen dreiphasigen Betrieb bestehen. Auf diese Weise können über die Phasenleitung 8 der Phase W sowohl die Erregerwicklung 6 als auch die entsprechende Statorwicklung 23 der elektrischen Maschine 2 bestromt werden.

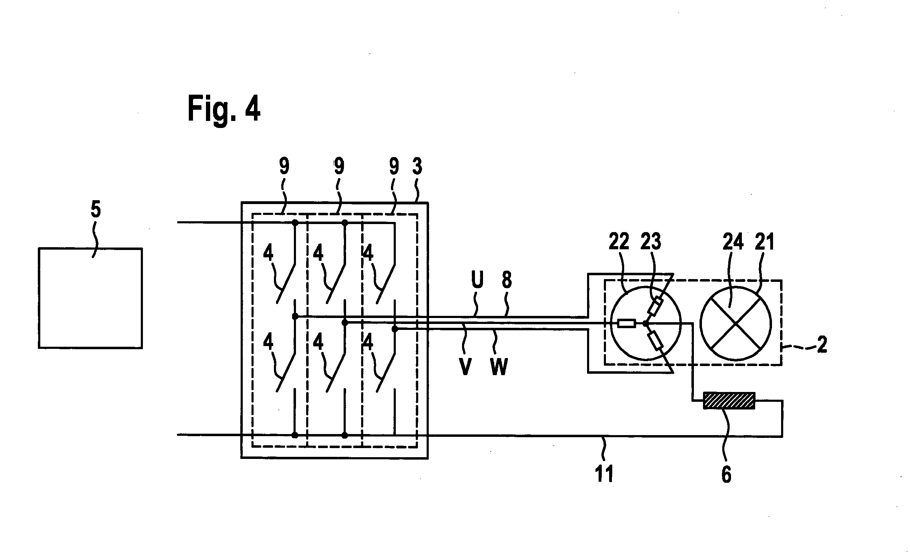

In Figur 4 ist eine schematische Darstellung einer weiteren Ausführungsform der fremderregten elektrischen Maschine dargestellt. Im Gegensatz zu dem Ausführungsbeispiel der Figur 3 ist hier die Erregerwicklung 6 zwischen dem niedrigen Versorgungspotential V_{L} und einem Sternpunkt der dreiphasigen Statorwicklung 23 geschaltet. Der Sternpunkt der Statorwicklung 23 ist mit der dreiphasigen Ansteuerung, die als Beispiel durch die Stromverläufe der Figur 2 dargestellt ist, in der Regel auf einem quasi-festen Potential, so dass ein konstanter Erregerstrom durch die Erregerwicklung 6 gewährleistet werden kann. Zum Einstellen des Erregerstroms kann jedoch das Sternpunktpotential durch Variation der Tastverhältnisse bei der Ansteuerung der Inverterschaltungen 9 der Leistungsstufe 3 variiert werden. Die Variation der Erregerspannung zwischen dem Sternpunkt der elektrischen Maschine und einem der Versorgungspotentiale kann beispielsweise durch Beaufschlagen der Tastverhältnisse zur pulsweitenmodulierten Ansteuerung jeder der Inverterschaltungen 9 der Leistungsstufe 3 mit einem bestimmten Tastverhältnisoffset erreicht werden.

Es ist vorteilhaft, wenn die Induktivität der Erregerspule deutlich, beispielsweise um mehr als eine Zehnerpotenz, größer ist als die vergleichbaren Induktivitäten der Statorwicklungen 23. Ein dadurch indirekt generierter Tiefpass des Erregerkreises mit einer wesentlich geringeren Grenzfrequenz entkoppelt die Erregerwicklung 6 von den Induktivitäten der Statorwicklungen 23.

Gemäß einer weiteren Ausführungsform kann der Anschluss der Erregerwicklung 6, der mit dem niedrigen Versorgungspotential verbunden ist, auf die Motormasse gelegt werden, die üblicherweise an dem Gehäuse anliegt. Es ist damit möglich, die Erregerwicklungsleitung 11 zum Anschließen der Erregerwicklung 6 direkt mit dem Gehäuse zu verbinden, wodurch auch die Erregerwicklungsleitungen 11 eingespart werden.

## Patentansprüche

1. Elektronisch kommutierte elektrische Maschine (2), umfassend:
- einen Läufer (21);
- eine Erregerwicklung (6), die an dem Läufer (21) angeordnet ist, um ein Gleichmagnetfeld in dem Läufer (21) zu generieren oder zu verändern;
- ein Stator (22) mit einer drei- oder mehrphasigen Statorwicklung (23) mit Phasen, die über an inverterschaltungen (9) angeschlossene Phasenleitungen (8) ansteuerbar sind;
- wobei die Erregerwicklung (6) mit der Statorwicklung (23) elektrisch verbunden ist,
wobei die Statorwicklung (23) in Sternschaltung verschaltete Statorspulen aufweist,
**dadurch gekennzeichnet, dass**
die Erregerwicklung (6) mit einem Sternpunkt der Sternschaltung und mit einem Versorgungspotential der Inverterschaltungen (9) lediglich über eine Erregerwicklungsleitung (11) verbunden ist, wobei zum Einstellen des Erregerstroms das sternpunktpotential durch Variation der Tastverhältnisse bei der Anstenerung der Inverterschaltungen (9) variert wird.

2. Elektrische Maschine (2) nach Anspruch 1, wobei insbesondere die Erregerwicklungsleitung (11) mit einem elektrisch leitenden Gehäuse der elektrischen Maschine (2) verbunden ist.

3. Motorsystem (1) umfassend:
- eine elektrische Maschine (2) nach Anspruch 1 oder 2;
- eine Leistungsstufe (3) zum Bereitstellen von Phasenspannungen bzw. Phasenströmen auf den Phasenleitungen (8);
- eine Steuereinheit (5) zum Ansteuern der Leistungsstufe (3), so dass Phasenspannungen jeweils sinusförmige, zueinander phasenversetzte Spannungsverläufe aufweisen.

4. Motorsystem (1) nach Anspruch 3, wobei die Steuereinheit (5) ausgebildet ist, um die Phasenspannungen mithilfe einer Pulsweitenmodulation zu generieren, indem Tastverhältnisse der Pulsweitenmodulation zum Generieren der Phasenspannungen variiert werden, und um einen Strom durch die Erregerwicklung einzustellen, indem die Tastverhältnisse für alle Phasenspannungen mit einem Tastverhältnisoffset beaufschlagt werden.

5. Verfahren zum Betreiben einer elektrischen Maschine (2) nach Anspruch 1 oder 2, wobei die Leistungsstufe (3) so angesteuert wird, dass Phasenspannungen jeweils sinusförmige, zueinander phasenversetzte Spannungsverläufe aufweisen.

6. Verfahren nach Anspruch 5, wobei die Phasenspannungen mithilfe einer Pulsweitenmodulation generiert werden, indem Tastverhältnisse der Pulsweitenmodulation zum Generieren der Phasenspannungen variiert werden, und wobei ein Strom durch die Erregerwicklung (6) eingestellt wird, indem die Tastverhältnisse für alle Phasenspannungen mit einem Tastverhältnisoffset beaufschlagt werden.

## Claims

1. Electronically commutated electric machine (2), comprising:
- a rotor (21);
- an exciter winding (6) arranged at the rotor (21) in order to generate or alter a direct magnetic field in the rotor (21); and
- a stator (22) having a three-phase or polyphase stator winding (23) with phases which can be driven via phase lines (8) connected to inverter circuits (9);
- wherein the exciter winding (6) is electrically connected to the stator winding (23),
- wherein the stator winding (23) has stator coils interconnected in star connection,
**characterized in that**
the exciter winding (6) is connected to a star point of the star connection and to a supply potential of the inverter circuits (9) only via an exciter winding line (11), wherein for setting the exciter current the star point potential is varied by variation of the duty ratios during the driving of the inverter circuits (9).

2. Electric machine (2) according to Claim 1, wherein in particular the exciter winding line (11) is connected to an electrically conductive housing of the electric machine (2).

3. Motor system (1) comprising:
- an electric machine (2) according to Claim 1 or 2;
- a power stage (3) for proving phase voltages and/or phase currents on the phase lines (8);
- a control unit (5) for driving the power stage (3), such that phase voltages have in each case sinusoidal voltage profiles that are phase-offset with respect to one another.

4. Motor system (1) according to Claim 3, wherein the control unit (5) is designed to generate the phase voltages with the aid of a pulse width modulation by varying duty ratios of the pulse width modulation for generating the phase voltages, and to set a current through the exciter winding by applying a duty ratio offset to the duty ratios for all the phase voltages.

5. Method for operating an electric machine (2) according to Claim 1 or 2, wherein the power stage (3) is driven in such a way that phase voltages have in each case sinusoidal voltage profiles that are phase-offset with respect to one another.

6. Method according to Claim 5, wherein the phase voltages are generated with the aid of a pulse width modulation by the variation of duty ratios of the pulse width modulation for generating the phase voltages, and wherein a current through the exciter winding (6) is set by a duty ratio offset being applied to the duty ratios for all the phase voltages.

## Revendications

1. Moteur électrique (2) à commutation électronique, comprenant :
- un rotor (21) ;
- un enroulement d'excitation (6) disposé au niveau du rotor (21) pour gérer ou modifier un champ magnétique continu dans le rotor (21) ;
- un stator (22) avec un enroulement de stator (23) à trois phases ou pluriphasé avec des phases pouvant être excitées via des lignes de phase (8) raccordées aux circuits inverseurs (9) ;
l'enroulement d'excitation (6) étant relié sur le plan électrique à l'enroulement de stator (23) ; l'enroulement de stator (23) comportant des bobines de stator connectées en connexions en étoile ;
**caractérisé en ce que** :
l'enroulement d'excitation (6) avec un point d'étoile des connexions en étoile et avec un potentiel d'alimentation des circuits inverseurs (9) n'est relié que via un câble d'enroulement d'excitation (11), le réglage du courant d'excitation faisant varier le potentiel du point d'étoile par variation des rapports d'effleurement lors de l'excitation des circuits inverseurs (9).

2. Moteur électrique (2) selon la revendication 1, le câble d'enroulement d'excitation (11) étant notamment relié à un carter électriquement conducteur du moteur électrique (2).

3. Système de moteur (1) comprenant :
- un moteur électrique (2) selon la revendication 1 ou 2 ;
- un étage de puissance (3) permettant de mettre à disposition des tensions de phase et/ou des courants de phase sur les lignes de phase (8) ;
- une unité de commande (5) permettant d'exciter l'étage de puissance (3) de sorte que les tensions de phase comportent respectivement des courbes de tension de forme sinusoïdale, en décalage de phases les unes par rapport aux autres.

4. Système de moteur (1) selon la revendication 3, l'unité de commande (5) étant réalisée pour générer les tensions de phase à l'aide d'une modulation de largeur d'impulsion en faisant varier les rapports d'effleurement de la modulation de largeur d'impulsion en vue de générer les tensions de phase et de régler un courant traversant l'enroulement d'excitation en chargeant les rapports d'effleurement de toutes les tensions de phase avec un décalage de rapport d'effleurement.

5. Procédé d'entraînement d'un moteur électrique (2) selon la revendication 1 ou 2, l'étage de puissance (3) étant commandé de telle sorte que les tensions de phase comportent respectivement des courbes de tension de forme sinusoïdale en décalage de phases les unes par rapport aux autres.

6. Procédé selon la revendication 5, les tensions de phase étant générées à l'aide d'une modulation de largeur d'impulsion en faisant varier les rapports d'effleurement de la modulation de largeur d'impulsion pour générer les tensions de phase et un courant traversant l'enroulement d'excitation (6) étant réglé en chargeant les rapports d'effleurement de toutes les tensions de phase avec un décalage de rapport d'effleurement.
